# EUROPEAN PATENT SPECIFICATION

(11) **EP 1 758 335 B1**
(45) Date of publication and mention of the grant of the patent: **03.10.2007**
(21) Application number: 05255260.1
(22) Date of filing: 26.08.2005
(51) Int. Cl.: H04L 29/06

(54) **Methods and apparatus for maintaining appropriate authentication credentials and for providing current authentication credentials for a wireless communication device**
Verfahren und Vorrichtung zur Aufrechterhaltung geeigneter Authentifizierungsdaten und zur Bereitstellung aktueller Authentifizierungsdaten für ein schnurloses Kommunikationsendgerät
Méthodes et dispositif pour maintenir des données d'authentification appropriées et pour fournir des données d'authentification actuelles à un appareil de communication sans fil

(43) Date of publication of application: 28.02.2007
(60) Divisional application: 07112952.2
(73) Proprietor: Research In Motion Limited, Waterloo, Ontario N2L 3W8 (CA)
(72) Inventor: Plastid, Thomas Leonard Trevor, Ottawa, Ontario, K2B 5Z4 (CN); Lewis, Allan D., New Dundee, Ontario, N0B 2E0 (CA); Patterson, Ian M., Petersburg, Ontario, N0B 2H0 (CA)
(74) Representative: Roberts, Gwilym Vaughan

(56) References cited:
- EP-A- 1 494 429
- US-A1- 2003 131 110
- US-A1- 2004 242 229
- US-A1- 2005 164 737
- GLOBALPLATFORM: "GlobalPlatform Card Specification v2.0.1" GLOBALPLATFORM STANDARD SPECIFICATION, [Online] 7 April 2000 (2000-04-07), pages 1-183, XP002362776 Retrieved from the Internet: URL:http://www.globalplatform.org/specific ations/archived/card-tech-201.zip> [retrieved on 2006-01-13]
- WAP-FORUM: "WAP-182-ProvArch-20010314-a" WAP STANDARD, 14 March 2001 (2001-03-14), pages 1-22, XP002253357
- WAP FORUM: "PROVISIONING BOOTSTRAP ,WAP-184-ProvBoot-20010314-a" WAP STANDARD, 14 March 2001 (2001-03-14), pages 1-24, XP002253355

## Description

### FIELD OF THE INVENTION

The present invention generally relates to data service portability between wireless operators for a wireless communication device, and more specifically to dynamically updating data session authentication credentials of the wireless communication device as applicable to various wireless operators.

### BACKGROUND OF THE INVENTION

In a typical wireless portable communication device, a common data application using a common data service available across multiple wireless operator's networks, such as BlackBerry^{™}, instant messaging ("IM"), multimedia messaging service ("MMS"), and/or push-to-talk over cellular ("PoC") available on Internet and/or a private network, is loaded at the manufacturer. Such wireless portable communication devices are shipped to multiple wireless service operators who require the use of different data authentication credentials for the common data application. For example, in a Code-Division Multiple Access ("CDMA") 2000 1x Radio Transmission Technology ("1xRTT") network, where 1x refers to a single radio channel, for a third generation ("3G") mobile system, a network access identifier ("NAI") is used for a point-to-point protocol ("PPP"), and in a General Packet Radio Service ("GPRS"), an access point name ("APN") is used for a packet data protocol ("PDP") contexts.

For a particular wireless service operator, a specific data authentication is generally hard-coded into the wireless portable communications devices allocated for the particular wireless service operator as an operator customization. This method is the accepted practice in the industry, as it is highly desirable from a user's perspective, and obviates any need for the user to maintain knowledge of data authentication credentials. For example, an APN specifying a wireless bearer path for e-mail over one wireless service operator would be different from an APN for e-mail over another wireless service operator regardless of the fact that these wireless service operators may use the same server on the Internet. With local number portability laws in certain jurisdictions, such as those in the United States and European Union, subscribers are now allowed to switch wireless carriers while retaining the same telephone numbers in some circumstances. Generally, the local number portability relates to subscriber identification module ("SIM") lock for Global System for Mobile communications ("GSM") and GPRS networks, or Mobile Directory Number ("MDN") access as compared to International Mobile Subscriber Identity ("IMSI") in CDMA networks. However, with the prevalence of data centric wireless portable communication devices, some subscribers may wish not only to retain the current telephone numbers with a new wireless service provider, but also to continue using the same wireless portable communication devices and its data applications with the new wireless communication service provider.

A document entitled "GlobalPlatform Card Specification v2.0.1", XP002362776, describes the standard for multi-application chip card systems. The system allows for the possibility of updating or deleting applications and installing new applications. Keys are used to initiate a Secure Channel for communications, where a key set version is utilized to identify the appropriate key set version. In European Patent Application EP1494429A2, a method for implementing secure corporate communication via a public network is described. In the method, if a local application program is not configured, then configuration information is received from a publicly accessible database. The local application program is then configured and the creation of the secure communication link is executed based on the configuration.

The invention is set out in the claims.

### BRIEF DESCRIPTION OF THE DRAWINGS

FIG. 1 is an exemplary environment in which a wireless portable communication device in accordance with at least one of the preferred embodiments may be practiced;
FIG. 2 is an exemplary flowchart illustrating a process in the wireless portable communication device for maintaining up-to-date authorization credentials for accessing the common data application in accordance with at least one of the preferred embodiments;
FIG. 3 is an exemplary block diagram of the wireless portable communication device configured to maintain appropriate authentication credentials required for the common data application in the current service network in accordance with at least one of the preferred embodiments; and
FIG. 4 is an exemplary flowchart illustrating a process in the wireless communication network for providing current authentication credentials required for the common data application accessible through the wireless communication network in accordance with at least one of the preferred embodiments.

### DETAILED DESCRIPTION OF THE PREFERRED EMBODIMENTS

A wireless portable communication device receives an up-to-date authentication credentials required for a common data application in a wireless communication network in which the wireless portable communication device is currently registered. The up-to-date authentication credentials may include a list of a plurality of wireless communication networks mapped against the up-to-date authentication credentials. The wireless portable communication device may receive the up-to-date authentication credentials periodically at a predetermined interval, based upon a predetermined condition, or by requesting the up-to-date authentication credentials. The up-to-date authentication credentials are then prioritized over existing authentication credentials, and are used for the common data application in the wireless communication network in which the wireless portable communication device is currently registered. The wireless communication network, which requires authentication credentials for the common data application, keeps the required authentication credentials up to date, and transmits the up-to-date authorization credentials periodically at a predetermined interval, based upon a predetermined condition, or in response to receiving a request for the up-to-date authentication credentials. The wireless communication network allows the wireless portable communication device having the up-to-date authentication credentials a use of the common data application.

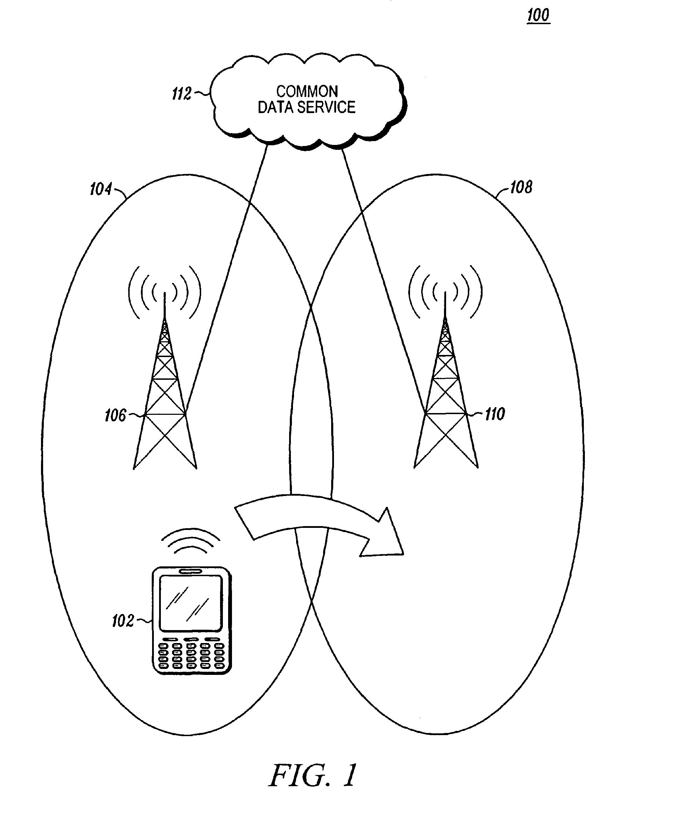

FIG. 1 is an exemplary environment 100 in which a wireless portable communication device 102 in accordance with at least one of the preferred embodiments may be practiced. The wireless portable communication device 102 is presently shown to be located in a first coverage area 104 supported by a first wireless communication network 106, which is adjacent to a second coverage area 108 supported by a second wireless communication network 110. The wireless portable communication device 102 has default authentication credentials for a common data application such as an e-mail application, which is maintained in a common service 112, accessed through the first wireless communication network 106. While the wireless portable communication device 102 is within the first coverage area 104 and is registered to the first wireless communication network 106, the wireless portable communication device 102, having the default authentication credentials fully compatible with the first wireless communication network 106, properly accesses the common data application. However, as the wireless portable communication device 102 moves from the first coverage area 104 to the second coverage area 108 and re-registers to the second wireless communication network 110, the default authentication credentials of the wireless portable communication device 102 may not be compatible to access the common data application in the second wireless communication network 110. For an exemplary case where the user is permanently changing his subscription to the operator of the wireless communication network 110, the wireless portable communication device 102 therefore needs to able to update the default authentication credentials to new authentication credentials that are compatible in the second wireless communication network 110 before being able to properly access the common data application. Further, the first wireless communication network 106 may change the default authentication credentials from time to time, and may cause the wireless portable communication device 102 to fail to access the common data application properly. Therefore, the wireless portable communication device 102 needs to be able to maintain up-to-date authentication credentials.

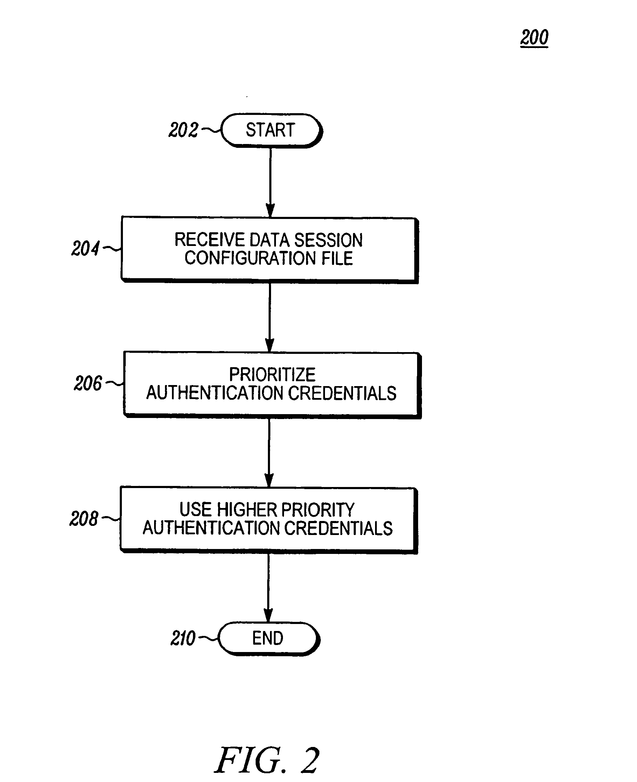

FIG. 2 is an exemplary flowchart 200 illustrating a process in the wireless portable communication device 102 for maintaining up-to-date authorization credentials for accessing the common data application in accordance with at least one of the preferred embodiments. The wireless portable communication device 102 has default authentication credentials required for the common data application in a default service network, which is the first wireless communication network 106. The process begins in block 202, and the wireless portable communication device 102 receives a data session configuration file, which includes authentication credentials in block 204. The wireless portable communication device 102 may typically receive the data session configuration file wirelessly from the current wireless communication network, but it may alternatively receive the data session configuration file by downloading from the internet. The data session configuration file may further include a list of a plurality of service networks mapped against the received authentication credentials for use with the common data application. This plurality applies as the user subscriptions to a plurality of wireless network operators change. The wireless portable communication device 102 may receive the data session configuration file based upon various conditions. The wireless portable communication device 102 may transmit a request to receive the data session configuration file, or may receive the data session configuration file based upon a predetermined condition. For example, the wireless portable communication device 102 may receive the data session configuration file upon registering to the current service network using a common registration channel, upon failing to properly access the common data application in the current service network, or upon roaming from the default service network to the current service network. The wireless portable communication device 102 may also autonomously receive the data session configuration file periodically.

The wireless portable communication device 102 may further determine the compatibility associated with the wireless portable communication device 102, a subscriber identity module in the wireless portable communication device 102, and the current wireless communication network, and may receive the data session configuration file based upon the compatibility. The subscriber identity module may be one of a Subscriber Identity Module ("SIM") used in networks based upon Global System for Mobile Communications ("GSM"), a Removable User Identification Module ("R-UIM") used in networks based upon Code Division Multiple Access ("CDMA"), or any other similar subscriber identification module.

In block 206, the wireless portable communication device 102 prioritizes the authentication credentials between the default authentication credentials and the received authentication credentials. For example, as previously shown in FIG. 1, when the wireless portable communication device 102 receives new authentication credentials as a result of moving from the first wireless communication network 106 to the second wireless communication network 110 requiring the new authorization credentials to access the common data application, the new received authorization credentials are prioritized over the default authorization credentials. Once prioritized, the default authentication credentials may be overwritten with the received authentication credentials, making the received authentication credentials as new default authentication credentials. Alternatively, both the default authentication credentials and the received authentication credentials are stored in the wireless portable communication device 102, and may be available for later usage. In block 208, the wireless portable communication device 102 uses the authentication credentials having higher priority for the common data application in the current service network. The authorization credentials may be re-prioritized when the wireless portable communication device 102 moves back to the first wireless communication network 106. The process then ends in block 210.

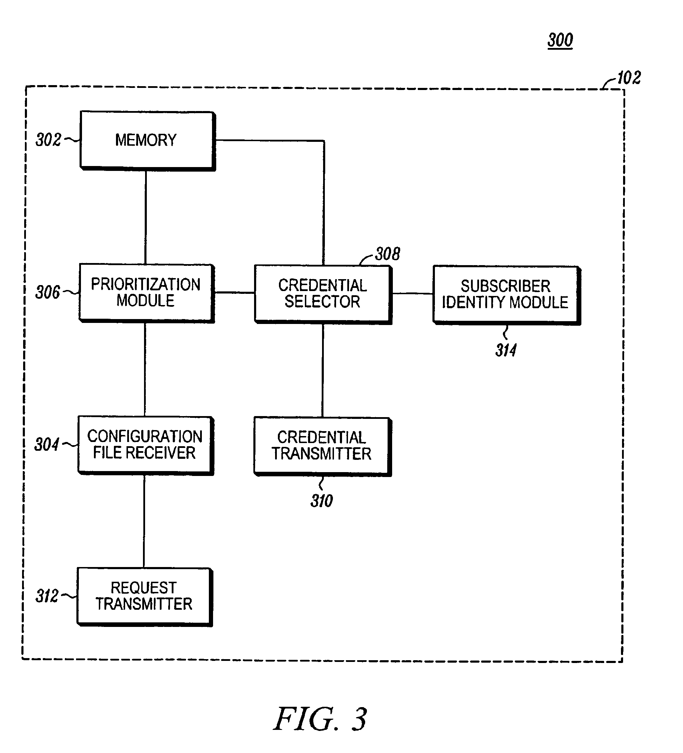

FIG. 3 is an exemplary block diagram 300 of the wireless portable communication device 102 configured to maintain appropriate authentication credentials required for the common data application in the current service network in accordance with at least one of the preferred embodiments. A battery, a display, a keypad, a speaker, a microphone, an antenna, and other normally associated components are understood to be present but are not specifically shown with the wireless portable communication device 102 for simplicity. The wireless portable communication device 102 has in memory 302 default authentication credentials, which are required for the common data application in a default service network, such as the first wireless communication network 104. The wireless portable communication device 102 has a configuration file receiver 304, which is configured to receive a data session configuration file. The data session configuration file includes authentication credentials, and may further include a list of a plurality of service network mapped against the received authentication credentials for use with the common data application. A prioritization module 306 is coupled to the configuration file receiver 304 and to the memory 302, and is configured to prioritize between the default authentication credentials and the received authentication credentials. A credential selector 308 is coupled to the prioritization module 306, and is configured to select the authentication credentials having higher priority for the common data application in the current service provider. A credential transmitter 310 is coupled to the credential selector 308, and is configured to transmit the selected authorization credentials for the common data application in the current service network. The wireless portable communication device 102 may further have a request transmitter 312, which is coupled to the configuration file receiver 304 and is configured to transmit a request to receive the data session configuration file. The memory 302 may be further coupled to the credential selector 308, and be further configured to be overwritten with the authentication credentials selected by the credential selector 308. The memory 302 may comprise volatile and non-volatile memory modules, having the default authentication credentials programmed in the non-volatile memory module and having the received authentication credentials in the volatile memory module.

The wireless portable communication device 102, specifically the configuration file receiver 304, may be further configured to receive the data session configuration file based upon various predetermined conditions. For example, the configuration file receiver 304 may be configured to receive the data session configuration file upon registration of the wireless portable communication device 102 to the current service provider using a common registration channel, upon failure of the wireless portable communication device 102 to properly access the common data application in the current service provider, or upon the wireless portable communication device 102 roaming from the default service network to the current service network. The configuration file receiver 304 may be further configured to autonomously receive the data session configuration periodically. Further, the bearer path may be entirely independent from the wireless network for receipt of the configuration file, for example, it may be downloaded off of the internet to the wireless portable communication device 102.

The wireless portable communication device 102 may further comprise a subscriber identity module 314 such as a Subscriber Identity Module ("SIM") used in networks based upon Global System for Mobile Communications ("GSM") and a Removable User Identification Module ("R-UIM") used in networks based upon Code Division Multiple Access ("CDMA") or via the service programming implemented directly on the wireless portable communication device 102 where no R-UIM is present. The subscriber identity module 314 is coupled to the credential selector 308, and is configured to provide information to the current service network, such as the first wireless communication network 106 regarding the identity of a subscriber and associated services. Although typically a wireless portable communication device and its subscriber identity module are associated with the same wireless communication network provider, because the subscriber identity module is fully or partially compatible with similar wireless portable communication devices, the subscriber identity module associated with one wireless communication service provider may be used with a wireless portable communication device associated with another wireless communication service provider. Further, as a result of roaming or user subscription changes to other operators, such a combination of the wireless portable communication device and the subscriber identity module may register and operate in yet another wireless communication service provider's network. The configuration file receiver 304 may further be configured receive the data session configuration file based upon the compatibility among the wireless portable communication device 102, the subscriber identity module 314, and the current wireless communication network.

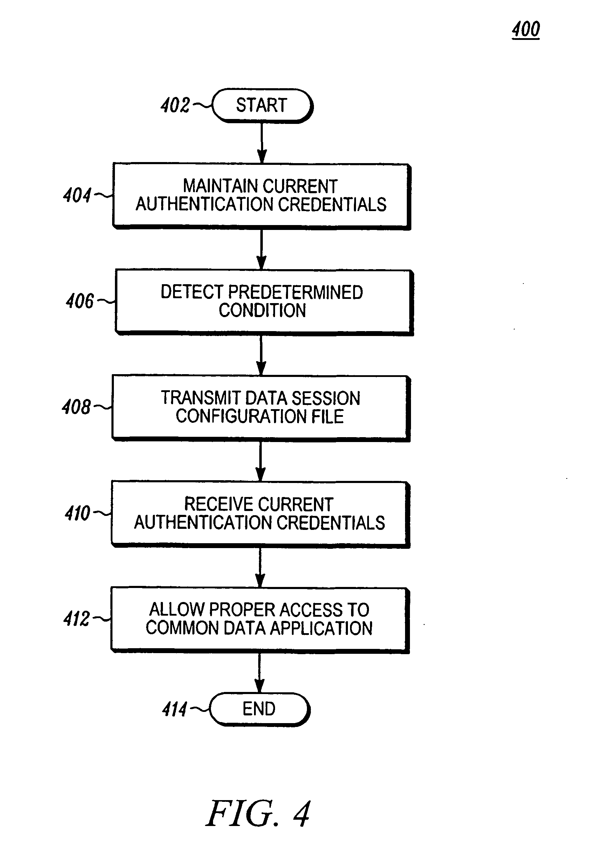

FIG. 4 is an exemplary flowchart 400 illustrating a process in the wireless communication network 106 for providing current authentication credentials required for the common data application accessible through the wireless communication network 106 in accordance with at least one of the preferred embodiments. The first wireless communication network 106 is simply referred as the wireless communication network 106 for this illustration. The process begins in block 402, and the wireless communication network 106 maintains the current, or up-to-date, authentication credentials indicative of currently required authentication credentials for the common data application in block 404. The wireless communication network 106 may maintain the current authentication credentials in various ways including, but not limited to, acquiring the current authentication credentials by communicating with common data service 112 periodically, and receiving the current authentication credentials from the common data service 112 as they are updated. The wireless communication network 106 then detects a predetermined condition for transmitting a data session configuration file in block 406. Alternatively, the common data service 112 may detect the predetermined condition through the wireless communication network 106. The data session configuration file includes the current authentication credentials, and may further include a list of a plurality of wireless communication networks mapped against the appropriate authentication credentials for use with the common data application. The predetermined condition to be detected in block 406 for transmitting the data session configuration may be one of various predetermined conditions including, but not limited to, receiving a request for the data session configuration file, receiving a registration of a wireless portable communication device using a common registration channel, determining a registered wireless portable communication device failing to properly access the common data application, and reaching a predetermined periodic transmission time interval. As one of the predetermined conditions, the wireless communication network 106, or the common data service 112, may further determine the compatibility associated with a wireless portable communication device registered in the wireless communication network 106, such as the wireless portable communication device 102, a subscriber identity module in the wireless portable communication device 102, and the wireless communication network 106 itself. The subscriber identity module may be one of a Subscriber Identity Module ("SIM") used in networks based upon Global System for Mobile Communications ("GSM"), a Removable User Identification Module ("R-UIM") used in networks based upon Code Division Multiple Access ("CDMA"), or any other similar subscriber identification module.

Upon detecting one of the predetermined conditions in block 406, the wireless communication network 106, or the common data service 112, transmits the data session configuration file in block 408, generally only to the wireless portable communication device 102, which triggered the predetermined condition detection process. Alternatively, the wireless communication network 106, or the common data service 112, may broadcast the data session configuration file periodically to all wireless portable communication devices currently registered to the wireless communication network 106. Upon receiving the current authentication credentials from the wireless portable communication device 102 in block 410, the wireless communication network 106 allows the wireless portable communication device 102 proper access to the common data application in block 412. The process then terminates in block 414.

While the preferred embodiments of the invention have been illustrated and described, it is to be understood that the invention is not so limited.

## Claims

1. A method for maintaining appropriate authentication credentials required for accessing a common data application (112) via a current wireless service network (110) within which a wireless portable communication device (102) currently operates, the wireless portable communication device (102) having default authentication credentials required for accessing the common data application (112) via a default wireless service network (106), the method comprising:
receiving a data session configuration file including authentication credentials;
prioritizing between the default authentication credentials and the received authentication credentials; and
using the authentication credentials having higher priority for accessing the common data application (112) via the current wireless service network (110).

2. The method of claim 1, wherein the data session configuration file further includes a list of a plurality of service networks mapped against the received authentication credentials for use with the common data application (112).

3. The method of claim 1, further comprising:
transmitting a request to receive the data session configuration file before receiving the data session configuration file.

4. The method of claim 1, further comprising:
overwriting the default authentication credentials with the received authentication credentials after prioritizing between the default authentication credentials and the received authentication credentials.

5. The method of claim 4 further comprising:
making the received authentication credentials as new default authentication credentials.

6. The method of claim 1, wherein receiving the data session configuration file includes receiving the data session configuration file upon registering the wireless portable communication device (102) to the current wireless service network (110) using a common registration channel.

7. The method of claim 1, wherein receiving the data session configuration file includes receiving the data session configuration file upon failing to properly access the common data application (112) via the current wireless service network (110).

8. The method of claim 1, wherein receiving the data session configuration file includes autonomously receiving the data session configuration file periodically.

9. The method of claim 1, wherein receiving the data session configuration file includes receiving the data session configuration file upon roaming from the default wireless service network (106) to the current wireless service network (110).

10. The method of claim 1, wherein receiving the data session configuration file includes receiving the data session configuration file upon determining that the wireless portable communication device (102) is associated with a different wireless service network from the current wireless service network (110).

11. The method of claim 1, wherein receiving the data session configuration file includes receiving the data session configuration file upon determining that a subscriber identity module used in the wireless portable communication device (102) is associated with a different wireless service network from at least one of:
a wireless service network (106) associated with the wireless portable communication device (102), and
the current wireless service network (110).

12. The method of claim 11, wherein the subscriber identity module is at least one of:
a Subscriber Identity Module used in networks based upon Global System for Mobile Communications, and
a Removable User Identification Module used in networks based upon Code Division Multiple Access.

13. A wireless portable communication device (102) configured to maintain appropriate authentication credentials required for accessing a common data application (112) via a current wireless service network (110) within which the wireless portable communication device (102) currently operates, the wireless portable communication device (102) having default authentication credentials stored in memory, the default authentication credential required for accessing the common data application (112) via a default wireless service network (106), the wireless portable communication device (102) comprising:
the memory;
a configuration file receiver configured to receive a data session configuration file including authentication credentials;
a prioritization module coupled to the configuration file receiver and to the memory, the prioritization module configured to prioritize between the default authentication credentials and the received authentication credentials;
a credential selector coupled to the prioritization module, the credential selector configured to select the authentication credentials having higher priority for accessing the common data application (112) via the current wireless service network (110); and
a credential transmitter coupled to the credential selector, the credential transmitter configured to transmit the selected authorization credentials for accessing the common data application (112) via the current wireless service network (110).

14. The wireless portable communication device (102) of claim 13, wherein the data session configuration file further includes a list of a plurality of service networks mapped against the received authentication credentials for use with the common data application (112).

15. The wireless portable communication device (102) of claim 13 further comprising:
a request transmitter coupled to the configuration file receiver, the request transmitter configured to transmit a request to receive the data session configuration file.

16. The wireless portable communication device (102) of claim 13, wherein the memory storing the default authentication credentials is further coupled to the credential selector and is further configured to be overwritten with the selected authentication credentials.

17. The wireless portable communication device (102) of claim 13, wherein the configuration file receiver is further configured to receive the data session configuration file upon registration of the wireless portable communication device (102) to the current wireless service network (110) using a common registration channel.

18. The wireless portable communication device (102) of claim 13, wherein the configuration file receiver is further configured to receive the data session configuration file upon failure of the wireless portable communication device (102) to properly access the common data application (112) via the current wireless service network (110).

19. The wireless portable communication device (102) of claim 13, wherein the configuration file receiver is further configured to autonomously receive the data session configuration periodically.

20. The wireless portable communication device (102) of claim 13, wherein the configuration file receiver is further configured to receive the data session configuration file upon the wireless portable communication device (102) roaming from the default wireless service network (106) to the current wireless service network (110).

21. The wireless portable communication device (102) of claim 13, wherein the configuration file receiver is further configured to receive the data session configuration file upon determination that the wireless portable communication device (102) is associated with a different wireless service network from the current wireless service network (110).

22. The wireless portable communication device (102) of claim 13, wherein the configuration file receiver is further configured to receive the data session configuration file upon a determination that a subscriber identity module used in the wireless portable communication device (102) is associated with a different service network from at least one of:
a wireless service network (106) associated with the wireless portable communication device (102), and
the current wireless service network (110).

23. The wireless portable communication device (102) of claim 13, wherein the subscriber identity module is at least one of:
a Subscriber Identity Module used in networks based upon Global System for Mobile Communications, and
a Removable User Identification Module used in networks based upon Code Division Multiple Access.

## Patentansprüche

1. Verfahren zum Aufrechterhalten geeigneter Authentifizierungsdaten, die zum Zugang einer gemeinsamen Datenanmeldung (112) über ein aktuelles drahtloses Dienstnetz (110), in welchem eine drahtlose tragbare Kommunikationsvorrichtung (102) augenblicklich wirkt, erforderlich sind, wobei die drahtlose tragbare Kommunikationsvorrichtung (102) Standard-Authentifizierungsdaten, die zum Zugang der gemeinsamen Datenanmeldung (112) über ein drahtloses Standard-Dienstnetz (106) erforderlich sind, aufweist, wobei das Verfahren umfasst:
Empfangen einer Datensitzungskonfigurationsdatei, die Authentifizierungsdaten umfasst,
Setzen einer Priorität zwischen den Standard-Authentifizierungsdaten und den empfangenen Authentifizierungsdaten, und Verwenden der Authentifizierungsdaten, die eine höhere Priorität zum Zugang der gemeinsamen Datenanmeldung (112) über das aktuelle drahtlose Dienstnetz (110) aufweisen.

2. Verfahren nach Anspruch 1, wobei die Datensitzungskonfigurationsdatei weiterhin eine Liste von einer Vielzahl von Dienstnetzen, welche auf die empfangenen Authentifizierungsdaten zur Verwendung mit der gemeinsamen Datenanmeldung (112) abgebildet sind, umfasst.

3. Verfahren nach Anspruch 1, weiterhin umfassend:
Übertragen einer Anforderung, um die Datensitzungskonfigurationsdatei vor Empfangen der Datensitzungskonfigurationsdatei zu empfangen.

4. Verfahren nach Anspruch 1, weiterhin umfassend:
Überschreiben der Standard-Authentifizierungsdaten mit den empfangenen Authentifizierungsdaten nach Setzen einer Priorität zwischen den Standard-Authentifizierungsdaten und den empfangenen Authentifizierungsdaten.

5. Verfahren nach Anspruch 4, weiterhin umfassend:
Setzen der empfangenen Authentifizierungsdaten als die neuen Standard-Authentifizierungsdaten.

6. Verfahren Anspruch 1, wobei ein Empfangen der Datensitzungskonfigurationsdatei ein Empfangen der Datensitzungskonfigurationsdatei nach Registrieren der drahtlosen tragbaren Kommunikationsvorrichtung (102) in dem aktuellen drahtlosen Dienstnetz (110) unter Verwendung eines gemeinsamen Registrierungkanals umfasst.

7. Verfahren nach Anspruch 1, wobei ein Empfangen der Datensitzungskonfigurationsdatei ein Empfangen der Datensitzungskonfigurationsdatei nach Fehlschlagen eines richtigen Zugangs zu der gemeinsamen Datenanmeldung (112) über das aktuelle drahtlose Dienstnetz (110) umfasst.

8. Verfahren nach Anspruch 1, wobei ein Empfangen der Datensitzungskonfigurationsdatei ein autonomes Empfangen der Datensitzungskonfigurationsdatei in periodischer Weise umfasst.

9. Verfahren nach Anspruch 1, wobei ein Empfangen der Datensitzungskonfigurationsdatei ein Empfangen der Datensitzungskonfigurationsdatei nach Weiterleiten von dem drahtlosen Standard-Dienstnetz (106) zu dem aktuellen drahtlosen Dienstnetz (110) umfasst.

10. Verfahren Anspruch 1, wobei ein Empfangen der Datensitzungskonfigurationsdatei ein Empfangen der Datensitzungskonfigurationsdatei nach Bestimmen, dass die drahtlose tragbare Kommunikationsvorrichtung (102) einem unterschiedlichen drahtlosen Dienstnetz von dem aktuellen drahtlosen Dienstnetz (110) zugeordnet ist, umfasst.

11. Verfahren nach Anspruch 1, wobei ein Empfangen der Datensitzungskonfigurationsdatei ein Empfangen der Datensitzungskonfigurationsdatei nach Bestimmen, dass ein Abonnenten-Identitätsmodul, welches in der drahtlosen tragbaren Kommunikationsvorrichtung (102) verwendet wird, einem unterschiedlichen drahtlosen Dienstnetz von wenigstens einem von:
einem drahtlosen Dienstnetz (106), welches der drahtlosen tragbaren Kommunikationsvorrichtung (102) zugeordnet ist, und
dem aktuellen drahtlosen Dienstnetz (110) zugeordnet wird.

12. Verfahren nach Anspruch 11, wobei das Abonnenten-Identitätsmodul wenigstens eines von:
einem Abonnenten-Identitätsmodul, das in Netzen, welche auf Global System for Mobile Communications basieren, verwendet wird, und
einem entfernbaren Benutzer-Identifizierungsmodul, das in Netzen, welche auf Code Division Multiple Access basieren, verwendet wird,
ist.

13. Drahtlose tragbare Kommunikationsvorrichtung (102), die konfiguriert ist, um geeignete Authentifizierungsdaten, die zum Zugang einer gemeinsamen Datenanmeldung (112) über ein aktuelles drahtloses Dienstnetz (110), in welchem die drahtlose tragbare Kommunikationsvorrichtung (102) augenblicklich wirkt, erforderlich sind, aufrechtzuerhalten, wobei die drahtlose tragbare Kommunikationsvorrichtung (102) in einem Speicher gespeicherte Standard-Authentifizierungsdaten aufweist, wobei die Standard-Authentifizierungsdaten zum Zugang der gemeinsamen Datenanmeldung (112) über ein drahtloses Standard-Dienstnetz (106) erforderlich sind, wobei die drahtlose tragbare Kommunikationsvorrichtung (102) umfasst:
Den Speicher,
eine Konfigurationsdatei-Empfangseinrichtung, die konfiguriert ist, um eine Datensitzungskonfigurationsdatei, welche Authentifizierungsdaten umfasst, zu empfangen,
ein Prioritätssetzungs-Modul, das mit der Konfigurationsdatei-Empfangseinrichtung und dem Speicher verbunden ist, wobei das Prioritätssetzungs-Modul konfiguriert ist, eine Priorität zwischen den Standard-Authentifizierungsdaten und den empfangenen Authentifizierungsdaten zu setzen,
einer Daten-Auswahleinrichtung, die mit dem Prioritätssetzungs-Modul verbunden ist, wobei die Daten-Auswahleinrichtung konfiguriert ist, um die Authentifizierungsdaten, welche eine höhere Priorität aufweisen, zum Zugang der gemeinsamen Datenanmeldung (112) über das aktuelle drahtlose Dienstnetz (110) auszuwählen, und
einer Daten-Übertragungseinrichtung, die mit der Daten-Auswahleinrichtung verbunden ist, wobei die Daten-Übertragungseinrichtung konfiguriert ist, die ausgewählten Autorisierungsdaten zum Zugang der gemeinsamen Datenanmeldung (112) über das aktuelle drahtlose Dienstnetz (110) zu übertragen.

14. Drahtlose tragbare Kommunikationsvorrichtung (102) nach Anspruch 13, wobei die Datensitzungskonfigurationsdatei weiterhin eine Liste von einer Vielzahl von Dienstnetzen, welche den empfangenen Authentifizierungsdaten zur Verwendung mit der gemeinsamen Datenanmeldung (112) zugeordnet sind, umfasst.

15. Drahtlose tragbare Kommunikationsvorrichtung (102) nach Anspruch 13, weiterhin umfassend:
Eine Anforderungs-Übertragungseinrichtung, die mit der Konfigurationsdatei-Empfangseinrichtung verbunden ist, wobei die Anforderungs-Übertragungseinrichtung konfiguriert ist, eine Anforderung zu übertragen, um die Datensitzungskonfigurationsdatei zu empfangen.

16. Drahtlose tragbare Kommunikationsvorrichtung (102) nach Anspruch 13, wobei der Speicher, welcher die Standard-Authentifizierungsdaten speichert, weiterhin mit der Daten-Auswahleinrichtung verbunden ist und weiterhin konfiguriert ist, mit den ausgewählten Authentifizierungsdaten überschrieben zu werden.

17. Drahtlose tragbare Kommunikationsvorrichtung (102) nach Anspruch 13, wobei die Konfigurationsdatei-Empfangseinrichtung weiterhin konfiguriert ist, die Datensitzungskonfigurationsdatei nach Registrierung der drahtlosen tragbaren Kommunikationsvorrichtung (102) in dem aktuellen drahtlosen Dienstnetz (110) unter Verwendung eines gemeinsamen Registrierungkanals zu empfangen.

18. Drahtlose tragbare Kommunikationsvorrichtung (102) nach Anspruch 13, wobei die Konfigurationsdatei-Empfangseinrichtung weiterhin konfiguriert ist, die Datensitzungskonfigurationsdatei nach Fehlschlagen der drahtlosen tragbaren Kommunikationsvorrichtung (102) eines richtigen Zugangs zu der gemeinsamen Datenanmeldung (112) über das aktuelle drahtlose Dienstnetz (110) zu empfangen.

19. Drahtlose tragbare Kommunikationsvorrichtung (102) nach Anspruch 13, wobei die Konfigurationsdatei-Empfangseinrichtung weiterhin konfiguriert ist, die Datensitzungskonfigurationsdatei in periodischer Weise autonom zu empfangen.

20. Drahtlose tragbare Kommunikationsvorrichtung (102) nach Anspruch 13, wobei die Konfigurationsdatei-Empfangseinrichtung weiterhin konfiguriert ist, die Datensitzungskonfigurationsdatei nach Weiterleiten der drahtlosen tragbaren Kommunikationsvorrichtung (102) von dem drahtlosen Standard-Dienstnetz (106) zu dem aktuellen drahtlosen Dienstnetz (110) zu empfangen.

21. Drahtlose tragbare Kommunikationsvorrichtung (102) nach Anspruch 13, wobei die Konfigurationsdatei-Empfangseinrichtung weiterhin konfiguriert ist, die Datensitzungskonfigurationsdatei nach Bestimmung, dass die drahtlose tragbare Kommunikationsvorrichtung (102) einem unterschiedlichen drahtlosen Dienstnetz von dem aktuellen drahtlosen Dienstnetz (110) zugeordnet ist, zu empfangen.

22. Drahtlose tragbare Kommunikationsvorrichtung (102) nach Anspruch 13, wobei die Konfigurationsdatei-Empfangseinrichtung weiterhin konfiguriert ist, die Datensitzungskonfigurationsdatei nach einer Bestimmung, dass ein Abonnenten-Identitätsmodul, welches in der drahtlosen tragbaren Kommunikationsvorrichtung (102) verwendet ist, einem unterschiedlichen drahtlosen Dienstnetz von wenigstens einem von:
einem drahtlosen Dienstnetz (106), welches der drahtlosen tragbaren Kommunikationsvorrichtung (102) zugeordnet ist, und
dem aktuellen drahtlosen Dienstnetz (110) zugeordnet ist, zu empfangen.

23. Drahtlose tragbare Kommunikationsvorrichtung (102) nach Anspruch 13, wobei das Abonnenten-Identitätsmodul wenigstens eines von:
einem Abonnenten-Identitätsmodul, das in Netzen, welche auf Global System for Mobile Communications basieren, verwendet wird, und
einem entfernbaren Benutzer-Identifizierungsmodul, das in Netzen, welche auf Code Division Multiple Access basieren, verwendet wird,
ist.

## Revendications

1. Procédé destiné à la maintenance de données d'authentification appropriées exigées pour accéder à une application de données commune (112), via un réseau de service sans fil actuel (110), dans lequel fonctionne actuellement un dispositif de communication portable sans fil (102), le dispositif de communication portable sans fil (102) ayant des données d'authentification par défaut exigées pour accéder à l'application de données commune (112) via un réseau de service sans fil par défaut (106), le procédé comprenant les étapes consistant à :
recevoir un fichier de configuration de session de données comprenant des données d'authentification ;
établir une priorité entre les données d'authentification par défaut et les données d'authentification reçues ; et
utiliser les données d'authentification ayant la priorité la plus élevée pour accéder à l'application de données commune (112) via le réseau de service sans fil actuel (110).

2. Procédé selon la revendication 1, dans lequel le fichier de configuration de session de données comprend en outre une liste composée d'une pluralité de réseaux de service mappés avec les données d'authentification reçues, afin de les utiliser avec l'application de données commune (112).

3. Procédé selon la revendication 1, comprenant en outre l'étape consistant à :
émettre une demande de réception du fichier de configuration de session de données avant de recevoir le fichier de configuration de session de données.

4. Procédé selon la revendication 1, comprenant en outre l'étape consistant à :
écraser les données d'authentification par défaut à l'aide des données d'authentification reçues après avoir établi la priorité entre les données d'authentification par défaut et les données d'authentification reçues.

5. Procédé selon la revendication 4, comprenant en outre l'étape consistant à :
faire des données d'authentification reçues les nouvelles données d'authentification par défaut.

6. Procédé selon la revendication 1, dans lequel la réception du fichier de configuration de session de données comprend la réception du fichier de configuration de session de données après avoir enregistré le dispositif de communication portable sans fil (102) auprès du réseau de service sans fil actuel (110), en utilisant un canal d'enregistrement commun.

7. Procédé selon la revendication 1, dans lequel la réception du fichier de configuration de session de données comprend la réception du fichier de configuration de session de données après avoir échoué à accéder correctement à l'application de données commune (112) via le réseau de service sans fil actuel (110).

8. Procédé selon la revendication 1, dans lequel la réception du fichier de configuration de session de données comprend la réception autonome et périodique du fichier de configuration de session de données.

9. Procédé selon la revendication 1, dans lequel la réception du fichier de configuration de session de données comprend la réception du fichier de configuration de session de données après être passé du réseau de service sans fil par défaut (106) au réseau de service sans fil actuel (110).

10. Procédé selon la revendication 1, dans lequel la réception du fichier de configuration de session de données comprend la réception du fichier de configuration de session de données après avoir déterminé que le dispositif de communication portable sans fil (102) est associé à un réseau de service sans fil différent du réseau de service sans fil actuel (110).

11. Procédé selon la revendication 1, dans lequel la réception du fichier de configuration de session de données comprend la réception du fichier de configuration de session de données après avoir déterminé qu'un module d'identité d'abonné utilisé dans le dispositif de communication portable sans fil (102) est associé à un réseau de service sans fil différent d'au moins un des deux réseaux suivants :
un réseau de service sans fil (106) associé au dispositif de communication portable sans fil (102), et
le réseau de service sans fil actuel (110).

12. Procédé selon la revendication 11, dans lequel le module d'identité d'abonné est au moins l'un des suivants :
module d'identité d'abonné utilisé dans des réseaux fondés sur la norme Système mondial de communication mobile (GSM), et
module amovible d'identification d'utilisateur utilisé dans des réseaux fondés sur l'accès multiple à répartition par code.

13. Dispositif de communication portable sans fil (102) configuré pour la maintenance de données d'authentification appropriées exigées pour accéder à une application de données commune (112), via un réseau de service sans fil actuel (110) dans lequel fonctionne actuellement le dispositif de communication portable sans fil (102), le dispositif de communication portable sans fil (102) possédant des données d'authentification par défaut stockées en mémoire, les données d'authentification par défaut étant nécessaires pour accéder à l'application de données commune (112) via un réseau de service sans fil par défaut (106), le dispositif de communication portable sans fil (102) comprenant :
la mémoire ;
un récepteur de fichier de configuration, configuré pour recevoir un fichier de configuration de session de données contenant des données d'authentification ;
un module de prioritisation couplé au récepteur de fichier de configuration et à la mémoire, le module de prioritisation étant configuré pour établir la priorité entre les données d'authentification par défaut et les données d'authentification reçues ;
un sélecteur de données, couplé au module de prioritisation, le sélecteur de données étant configuré pour sélectionner les données d'authentification ayant la plus grande priorité pour accéder à l'application de données commune (112) via le réseau de service sans fil actuel (110) ; et
un émetteur de données couplé au sélecteur de données, l'émetteur de données étant configuré pour émettre les données d'authentification sélectionnées afin d'accéder à l'application de données commune (112) via le réseau de service sans fil actuel (110).

14. Dispositif de communication portable sans fil (102) selon la revendication 13, dans lequel le fichier de configuration de session de données comprend en outre une liste composée d'une pluralité de réseaux de service mappés avec les données d'authentification reçues, afin de les utiliser avec l'application de données commune (112).

15. Dispositif de communication portable sans fil (102) selon la revendication 13, comprenant en outre :
un émetteur de demande, couplé au récepteur de fichier de configuration, l'émetteur de demande étant configuré pour émettre une demande de réception du fichier de configuration de session de données.

16. Dispositif de communication portable sans fil (102) selon la revendication 13, dans lequel la mémoire stockant les données d'authentification par défaut est en outre couplée au sélecteur de données et est en outre configurée pour être écrasée par les données d'authentification sélectionnées.

17. Dispositif de communication portable sans fil (102) selon la revendication 13, dans lequel le récepteur de fichier de configuration est en outre configuré pour recevoir le fichier de configuration de session de données après enregistrement du dispositif de communication portable sans fil (102) auprès du réseau de service sans fil actuel (110), en utilisant un canal d'enregistrement commun.

18. Dispositif de communication portable sans fil (102) selon la revendication 13, dans lequel le récepteur de fichier de configuration est en outre configuré pour recevoir le fichier de configuration de session de données après que le dispositif de communication portable sans fil (102) a échoué à accéder correctement à l'application de données commune (112) via le réseau de service sans fil actuel (110).

19. Dispositif de communication portable sans fil (102) selon la revendication 13, dans lequel le récepteur de fichier de configuration est en outre configuré pour recevoir le fichier de configuration de session de données de manière autonome et périodique.

20. Dispositif de communication portable sans fil (102) selon la revendication 13, dans lequel le récepteur de fichier de configuration est en outre configuré pour recevoir le fichier de configuration de session de données après que le dispositif de communication portable sans fil (102) est passé du réseau de service sans fil par défaut (106) au réseau de service sans fil actuel (110).

21. Dispositif de communication portable sans fil (102) selon la revendication 13, dans lequel le récepteur de fichier de configuration est en outre configuré pour recevoir le fichier de configuration de session de données après qu'il a été déterminé que le dispositif de communication portable sans fil (102) est associé à un réseau de service sans fil différent du réseau de service sans fil actuel (110).

22. Dispositif de communication portable sans fil (102) selon la revendication 13, dans lequel le récepteur de fichier de configuration est en outre configuré pour recevoir le fichier de configuration de session de données après qu'il a été déterminé qu'un module d'identité d'abonné utilisé dans le dispositif de communication portable sans fil (102) est associé à un réseau de service sans fil différent d'au moins un des deux réseaux suivants :
un réseau de service sans fil (106) associé au dispositif de communication portable sans fil (102), et
le réseau de service sans fil actuel (110).

23. Dispositif de communication portable sans fil (102) selon la revendication 13, dans lequel le module d'identité d'abonné est au moins l'un des suivants :
module d'identité d'abonné utilisé dans des réseaux fondés sur la norme Système mondial de communication mobile (GSM), et
module amovible d'identification d'utilisateur utilisé dans des réseaux fondés sur l'accès multiple à répartition par code.
